# EUROPÄISCHE PATENTANMELDUNG

(11) **EP 2 769 905 A1**
(43) Veröffentlichungstag der Anmeldung: **27.08.2014**
(21) Anmeldenummer: 14155588.8
(22) Anmeldetag: 18.02.2014
(51) Int. Cl.: B62K 25/28, B62K 15/00

(54) **Klappfahrrad**

(30) Priorität: 20.02.2013 AT 501132013
(71) Anmelder: Interholz Handelsgesellschaft m.b.H., 4061 Pasching (AT)
(72) Erfinder: Stieger, Ewald, 4061 Pasching (AT)
(74) Vertreter: Hübscher, Helmut

(57) **Zusammenfassung**

Es wird ein Klappfahrrad mit einem eine Tretkurbel (10) aufnehmenden Gestellrahmen (1) beschrieben, an dessen Hauptabschnitt (2) ein Lagerschenkel (4) für eine mit einer Lagergabel (7) für das Vorderrad (8) versehene Lenksäule (5) und eine Hinterradschwinge (3) angelenkt sind, die mit dem Hauptabschnitt (2), einer Sattelstütze (13) und einem an der Sattelstütze (13) angreifenden Verbindungslenker (17) ein Gelenkviereck bildet. Um vorteilhafte Konstruktionsbedingungen zu schaffen, wird vorgeschlagen, dass der Hauptabschnitt (2) die Tretkurbel (10) aufnimmt und dass die Sattelstütze (13) am Hauptabschnitt (2) angelenkt und über den Verbindungslenker (17) mit der Hinterradschwinge (3) verbunden ist.

## Beschreibung

Die Erfindung bezieht sich auf ein Klappfahrrad mit einem eine Tretkurbel aufnehmenden Gestellrahmen, an dessen Hauptabschnitt ein Lagerschenkel für eine mit einer Lagergabel für das Vorderrad versehene Lenksäule und eine Hinterradschwinge angelenkt sind, die mit dem Hauptabschnitt, einer Sattelstütze und einem an der Sattelstütze angreifenden Verbindungslenker ein Gelenkviereck bildet.

Um für das Zusammenklappen eines Fahrrades einfache Handhabungsbedingungen zu schaffen, ist es bekannt (EP 2 489 583 A1), an die am Hauptabschnitt des Gestellrahmens angelenkte Hinterradschwinge eine Sattelstütze anzulenken, die mit dem Hauptabschnitt des Gestellrahmens über einen Verbindungslenker gekoppelt ist, sodass der Hauptabschnitt des Gestellrahmens, die Hinterradschwinge, die Sattelstütze und der Verbindungslenker ein Gelenkviereck bilden, das nach seiner Entriegelung mit dem Verschwenken der Sattelstütze nach vorne ein Abschwenken der Hinterradschwinge nach unten bedingt, sodass zum vollständigen Zusammenklappen des Gestellrahmens lediglich der Lagerschenkel für die Lenksäule gegenüber dem Hauptabschnitt des Gestellrahmens um eine parallel zur Ebene des Gestellrahmens verlaufende Schwenkachse seitlich gegen den Hauptabschnitt des Gestellrahmens zurückgeschwenkt werden muss, bis das in einer Lagergabel der Lenksäule gelagerte Vorderrad im Wesentlichen seitlich neben das Hinterrad zu liegen kommt. Damit der den Lenker tragende Teil der Lenksäule nicht den zusammengeklappten Gestellrahmen überragt, kann dieser Lenksäulenteil zusätzlich so um eine Gelenkachse abgeschwenkt werden, dass der Lenker etwa parallel zum Vorderrad verläuft. Durch das Zusammenfassen des Hauptabschnitts des Gestellrahmens, der Hinterradschwinge und der Sattelstütze zu einem Gelenkviereck wird zwar das Gegeneinanderverschwenken dieser Rahmenteile zwangsgesteuert, doch bleibt der für den zusammengeklappten Gestellrahmen erforderliche Platzbedarf erheblich, weil der Hauptabschnitt des Gestellrahmens beim Vorwärtsschwenken der Sattelstütze von der Hinterradschwinge weggeschwenkt wird und der Sattel der Sattelstütze zusätzlich diesen Hauptabschnitt überragt. Abgesehen davon ist die Tretkurbel in der Hinterradschwinge und nicht im Hauptabschnitt des Gestellrahmens angeordnet, was ungünstige Belastungsverhältnisse mit sich bringt.

Der Erfindung liegt somit die Aufgabe zugrunde, ein Klapprad zu schaffen, das sich nicht nur durch eine einfache Handhabung, sondern auch durch einen besonders geringen Platzbedarf für den zusammengeklappten Gestellrahmen auszeichnet.

Ausgehend von einem Klappfahrrad der eingangs geschilderten Art löst die Erfindung die gestellte Aufgabe dadurch, dass der Hauptabschnitt die Tretkurbel aufnimmt und dass die Sattelstütze am Hauptabschnitt angelenkt und über den Verbindungslenker mit der Hinterradschwinge verbunden ist.

Zufolge dieser Maßnahmen wird die Sattelstütze über das Gelenkviereck aus der verriegelten Gebrauchsstellung nicht nach vorne, sondern gegen die Hinterradschwinge nach hinten verschwenkt, die zugleich nach unten gegen den Hauptabschnitt des Gestellrahmens verschwenkt wird, sodass dieser Hauptabschnitt des Gestellrahmens etwa tangential zum Hinterrad verläuft. Dies wird dadurch ermöglicht, dass die Tretkurbel außerhalb des Verschwenkbereichs der Hinterradschwinge im Hauptabschnitt des Gestellrahmens gelagert wird. Da in der abgeklappten Stellung sowohl die Sattelstütze als auch der Hauptabschnitt des Gestellrahmens das Hinterrad tangential umschließen, wird der Platzbedarf für diese Klappstellung minimiert. Es braucht daher lediglich der Lagerschenkel für die Lenksäule um seine Anlenkachse gegen den Hauptabschnitt des Gestellrahmens so verschwenkt zu werden, dass das Vorderrad seitlich neben dem Hinterrad zu liegen kommt.

Da üblicherweise die Hinterradschwinge über einen Stoßdämpfe am Gestellrahmen abgestützt ist, kann der Verbindungslenker diesen Stoßdämpfer für die Hinterradschwinge bilden, was eine Konstruktionsvereinfachung darstellt.

Die erfindungsgemäße Ausführung des Gestellrahmens erlaubt die Ausrüstung des Fahrrades mit einem elektrischen Hilfsantrieb, wobei sich vorteilhafte Konstruktionsbedingungen ergeben, wenn der Hauptabschnitt des Gestellrahmens ein Gehäuse zur Aufnahme von Akkumulatoren für die Stromversorgung eines solchen elektrischen Hilfsantriebs bildet.

Obwohl es grundsätzlich möglich ist, den Lagerschenkel für die Lenksäule um eine zur Rahmenebene parallele Anlenkachse so zu verschwenken, dass das Vorderrad seitlich neben dem Hinterrad zu liegen kommt, ergeben sich weitere Möglichkeiten, den Platzbedarf für die Klappstellung des Fahrrades zu verringern, wenn die quer zur Ebene des Gestellrahmens verlaufende Anlenkachse zwischen dem nach unten abschwenkbaren Lagerschenkel für die Lenksäule und dem Hauptabschnitt des Gestellrahmens gegenüber der Achse der Tretkurbel geneigt verläuft, sodass beim Abschwenken dieses Lagerschenkels das in der Lagergabel gehaltene Vorderrad aufgrund der Neigung der Anlenkachse zusätzlich eine seitliche Versetzung erfährt, die das Nebeneinanderliegen von Vorder- und Hinterrad sicherstellt.

Der gegen das Hinterrad hin abgeschwenkte Lagerschenkel des Gestellrahmens verläuft in der zusammengeklappten Stellung des Fahrrads wiederum tangential zum Hinterrad, sodass das Hinterrad U-förmig vom Hauptabschnitt des Gestellrahmens und von der auf einem Ende des Hauptabschnitts angelenkten Sattelstütze sowie vom Lagerschenkel umrahmt wird, der am gegenüberliegenden Ende des Hauptabschnitts vorgesehen ist.

Der den Lenker tragende Abschnitt der Lenksäule kann - wie an sich bekannt - um eine gegenüber dem Lenker angenähert unter 45° geneigte Querachse abschwenkbar gelagert sein, sodass mit dem Abschwenken dieses Teils der Lenksäule der Lenker etwa parallel zum Vorderrad gedreht wird.

In der Zeichnung ist der Erfindungsgegenstand beispielsweise dargestellt. Es zeigen
- Fig. 1: ein erfindungsgemäßes Fahrrad in einer vereinfachten Seitenansicht in der verriegelten Gebrauchsstellung,
- Fig. 2: das Fahrrad mit entriegelter Sattelstütze nach dem Einleiten des Abschwenkens der Sattelstütze,
- Fig. 3: das Fahrrad mit der in die zusammengeklappte Stellung abgeschwenkten Hinterradschwinge,
- Fig. 4: das Fahrrad mit entriegeltem und zum Teil abgeschwenktem Lagerschenkel für die Lenksäule,
- Fig. 5: das Fahrrad in der vollständig zusammengeklappten Stellung in einer Seitenansicht und
- Fig. 6: das Fahrrad gemäß der Fig. 5 in einer Draufsicht.

Das dargestellte Fahrrad weist einen Gestellrahmen 1 auf, an dessen Hauptabschnitt 2 einerseits eine Hinterradschwinge 3 und anderseits ein Lagerschenkel 4 für eine Lenksäule 5 angelenkt sind. Die Lenksäule 5 ist mit einem Lenker 6 verbunden und trägt eine Lagergabel 7 für ein Vorderrad 8. Das in der Hinterradschwinge 3 gelagerte Hinterrad ist mit 9 bezeichnet und steht mit einer im Hauptabschnitt 2 des Gestellrahmens 1 gelagerten Tretkurbel 10 über einen aus Übersichtlichkeitsgründen nicht dargestellten Kettentrieb in Antriebsverbindung, wobei der Tretkurbeltrieb vorzugsweise an der Freilaufnabe eines Radnabenmotors 11 angreift. Der Sattel 12 ist auf einer Sattelstütze 13 angeordnet, die am Hauptabschnitt 2 des Gestellrahmens 1 über eine Anlenkachse 14 schwenkbar gelagert ist. Die über die Anlenkachse 15 verschwenkbare Hinterradschwinge 3 stützt sich über einen als Stoßdämpfer 16 ausgebildeten Verbindungslenker 17 an der Sattelstütze 13 ab. Die Anlenkachsen dieses Verbindungslenkers 17 sind mit 18 bezeichnet. Es zeigt sich somit, dass der Hauptabschnitt 2 des Gestellrahmens 1 mit der Hinterradschwinge 3 und der Sattelstütze 13 ein über den Verbindungslenker 17 gekoppeltes Gelenkviereck bildet, sodass mit dem Verschwenken der Sattelstütze 13 die Hinterradschwinge 3 zwangsgeführt mitverlagert wird.

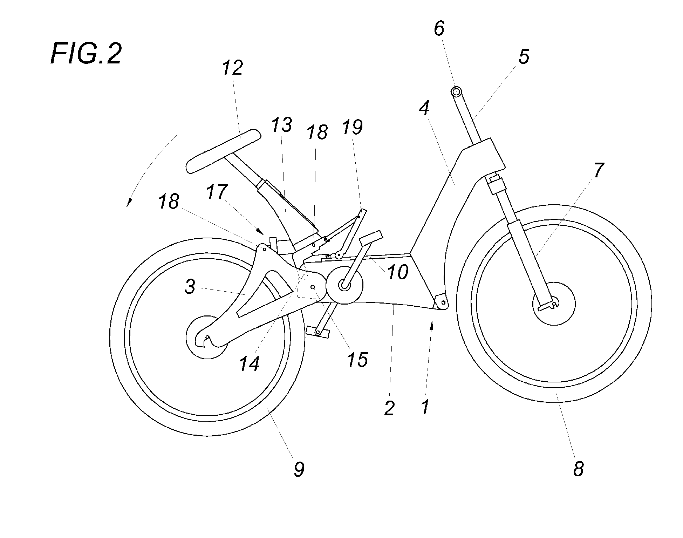

Gemäß der Fig. 2 wurde die Sattelstütze 13 durch ein Lösen einer entsprechenden Verriegelungseinrichtung 19 entriegelt und gemäß dem Pfeil 20 um die Anlenkachse 14 nach hinten gegen das Hinterrad 9 abgeschwenkt, wobei die Hinterradschwinge 3 über den Verbindungslenker 17 mitgenommen und um ihre Anlenkachse 15 nach unten gegen den Hauptabschnitt 2 des Gestellrahmens 1 verschwenkt wird.

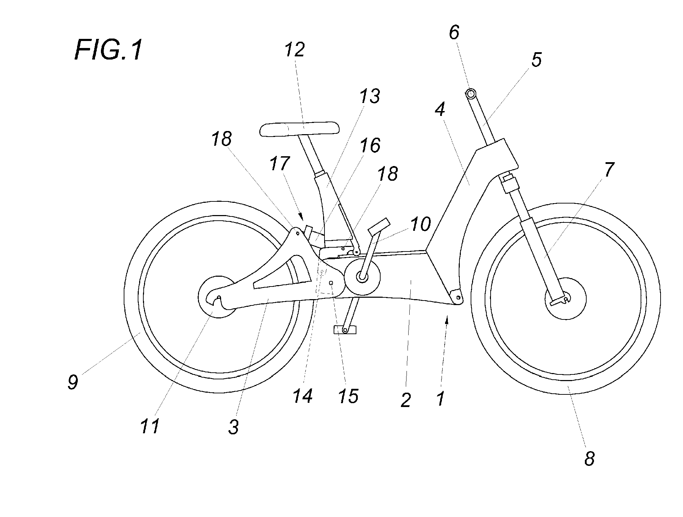

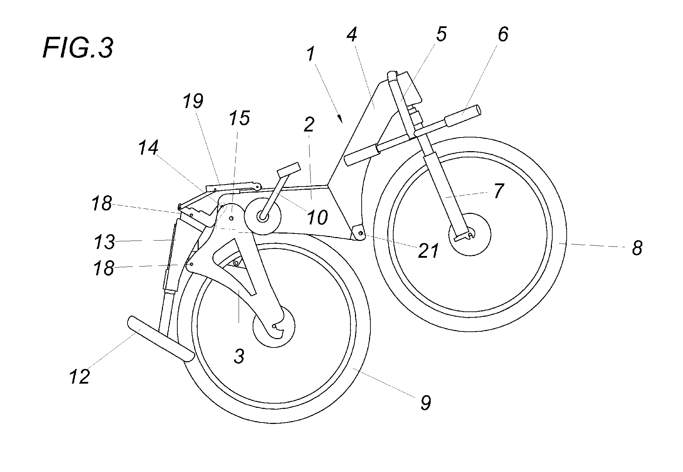

In der Fig. 3 ist die Endstellung dieses Abschwenkvorgangs dargestellt. Man erkennt, dass sowohl der Hauptabschnitt 2 des Gestellrahmens 1 als auch die Sattelstütze 13 etwa tangential zum Hinterrad 9 verlaufen, was eine wesentliche Voraussetzung für einen geringen Platzbedarf des zusammengeklappten Fahrrads darstellt. Aus der Stellung nach der Fig. 3 ist somit für die vollständige Klappstellung lediglich das Vorderrad 8 mit dem Lagerschenkel 4 um die Anlenkachse 21 zwischen dem Hauptabschnitt 2 des Gestellrahmens 1 und dem Lageschenkel 4 so abzuschwenken, dass das Vorderrad 8 seitlich neben dem Hinterrad 9 zu liegen kommt. Damit der Lenker 6 der Lenksäule 5 nicht über den zusammengeklappten Gestellrahmen vorragt, wird der über den Lagerschenkel 4 vorstehende, den Lenker 6 tragende Teil der Lenksäule 5 um eine gegenüber dem Lenker 6 angenähert unter 45° geneigte Querachse abschwenkbar gelagert, was jedoch aus Übersichtlichkeitsgründen nicht näher dargestellt ist. In der Fig. 3 ist lediglich die gegenüber den Fig. 1 und 2 abgeschwenkte Klapplage der Lenksäule 5 dargestellt.

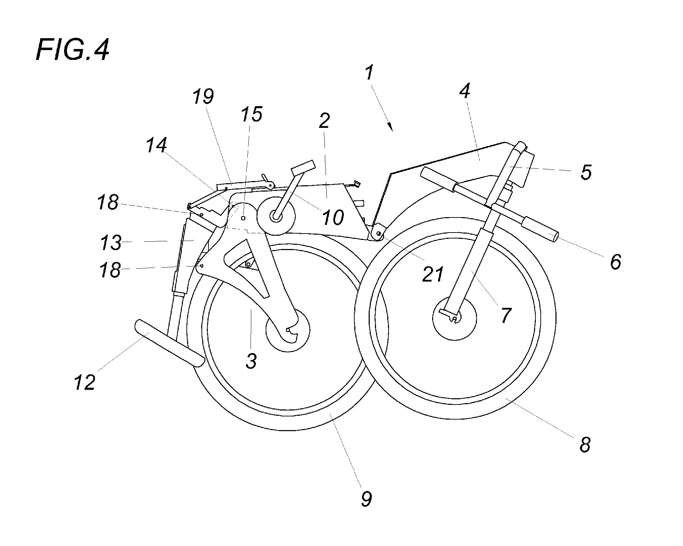

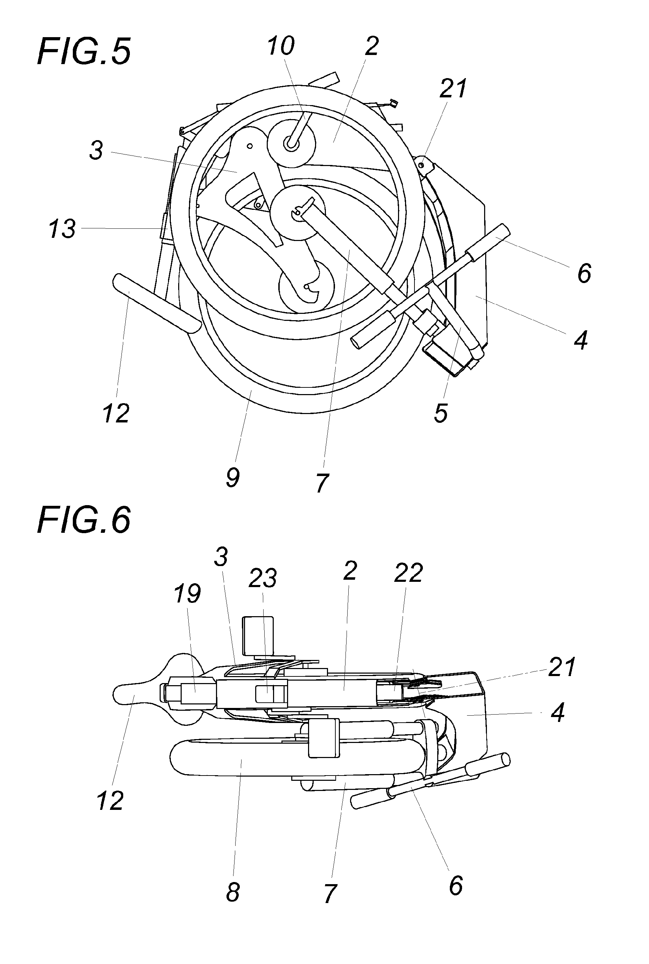

Nach einer Entriegelung des Lagerschenkels 4 über eine auf einem Riegel 22 einwirkende Verriegelungseinrichtung 23 wird gemäß der Fig. 4 der Lagerschenkel 4 des Gestellrahmens 1 um die Anlenkachse 21 abgeschwenkt, die nicht senkrecht zur Rahmenebene verläuft, sondern gegenüber einer Senkrechten zur Rahmenebene, also gegenüber der Achse der Tretkurbel 10, geneigt angeordnet ist. Aufgrund dieser Neigung wird der Lagerschenkel 4 beim Abschwenken seitlich versetzt, sodass das Vorderrad 8 seitlich neben das Hinterrad 9 verlagert werden kann, wie dies insbesondere aus der Fig. 6 entnommen werden kann.

In den Fig. 5 und 6 ist die vollständige Klappstellung des Fahrrads dargestellt. In der abgeschwenkten Stellung des Lagerschenkels 4 kommt dieser gemäß der Fig. 5 angenähert tangential zum Hinterrad 9 zu liegen, sodass das Hinterrad 9 vom Hauptabschnitt 2 und der an einem Ende des Hauptabschnitts 2 anschließenden Sattelstütze 13 sowie dem am anderen Ende angelenkten Lagerschenkel 4 U-förmig umschlossen wird, was eine sehr platzsparende Klappstellung sicherstellt. Der Fig. 6 ist zu entnehmen, dass auch die seitliche Ausladung des Fahrrades in der Klappstellung gering ist und im Wesentlichen durch die Breite der Hinterradschwinge 3 bzw. der Lagergabel 7 für das Vorderrad 8 bestimmt wird.

Zum Ausschwenken der Klappstellung des Fahrrads in die Gebrauchsstellung ist in umgekehrter Reihenfolge zunächst der Lagerschenkel 4 um die Anlenkachse 21 in die Ausgangslage zu verschwenken, wobei in der anschlagbegrenzten Ausschwenklage vorzugsweise eine selbständige Verriegelung über den Riegel 22 erfolgt. Nach dem Hochschwenken des abgeklappten Längssäulenteils braucht lediglich die Hinterradschwinge 3 mit Hilfe der Sattelstütze 13 in die Gebrauchslage verschwenkt und über die Verriegelungseinrichtung 19 verriegelt zu werden, um das Fahrrad in der verriegelten Gebrauchsstellung benützen zu können.

## Patentansprüche

1. Klappfahrrad mit einem eine Tretkurbel (10) aufnehmenden Gestellrahmen (1), an dessen Hauptabschnitt (2) ein Lagerschenkel (4) für eine mit einer Lagergabel (7) für das Vorderrad (8) versehene Lenksäule (5) und eine Hinterradschwinge (3) angelenkt sind, die mit dem Hauptabschnitt (2), einer Sattelstütze (13) und einem an der Sattelstütze (13) angreifenden Verbindungslenker (17) ein Gelenkviereck bildet, **dadurch gekennzeichnet, dass** der Hauptabschnitt (2) die Tretkurbel (10) aufnimmt und dass die Sattelstütze (13) am Hauptabschnitt (2) angelenkt und über den Verbindungslenker (17) mit der Hinterradschwinge (3) verbunden ist.

2. Klappfahrrad nach Anspruch 1, **dadurch gekennzeichnet, dass** der Verbindungslenker (17) als Stoßdämpfer (16) für die Hinterradschwinge (3) ausgebildet ist.

3. Klappfahrrad nach Anspruch 1 oder 2, **dadurch gekennzeichnet, dass** der Hauptabschnitt (2) des Gestellrahmens (1) ein Gehäuse zur Aufnahme von Akkumulatoren für die Stromversorgung eines elektrischen Hilfsantriebs bildet.

4. Klappfahrrad nach einem der Ansprüche 1 bis 3, **dadurch gekennzeichnet, dass** die quer zur Ebene des Gestellrahmens (1) verlaufende Anlenkachse (21) zwischen dem nach unten abschwenkbaren Lagerschenkel (4) für die Lenksäule (5) und dem Hauptabschnitt (2) des Gestellrahmens (1) gegenüber der Achse der Tretkurbel (10) geneigt verläuft.

5. Klappfahrrad nach einem der Ansprüche 1 bis 4, **dadurch gekennzeichnet, dass** der den Lenker (6) tragende Abschnitt der Lenksäule (5) um eine gegenüber dem Lenker (6) angenähert unter 45° geneigte Querachse abschwenkbar gelagert ist.
